# FASCICULE DE BREVET EUROPEEN

(11) **EP 0 608 383 B1**
(45) Date de publication et mention de la délivrance du brevet: **05.07.1995**
(21) Numéro de dépôt: 92923848.3
(22) Date de dépôt: 21.10.1992
(51) Int. Cl.: F16H 37/04, B60K 17/08

(54) **DISPOSITIF DE TRANSMISSION MODULAIRE ET GROUPE MOTO-PROPULSEUR AINSI EQUIPE**
MODULAR AUFGEBAUTES GETRIEBE UND EINE DAMIT AUSGESTATTETE ANTRIEBSEINHEIT
MODULAR TRANSMISSION DEVICE AND POWER UNIT SO EQUIPPED

(30) Priorité: 25.10.1991 FR 9113191
(43) Date de publication de la demande: 03.08.1994
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9200986
(87) Numéro de publication internationale: WO9308419

(56) Documents cités:
- DE-A- 2 403 504
- FR-A- 635 886
- FR-A- 2 186 109
- GB-A- 1 005 314

## Description

La présente invention concerne un dispositif de transmission modulaire comme defini par les caractéristiques du preambule de la revendication 1 basé sur le

FR-A-2 186 109 qui décrit une transmission réalisée à partir de modules assemblés les uns avec les autres.

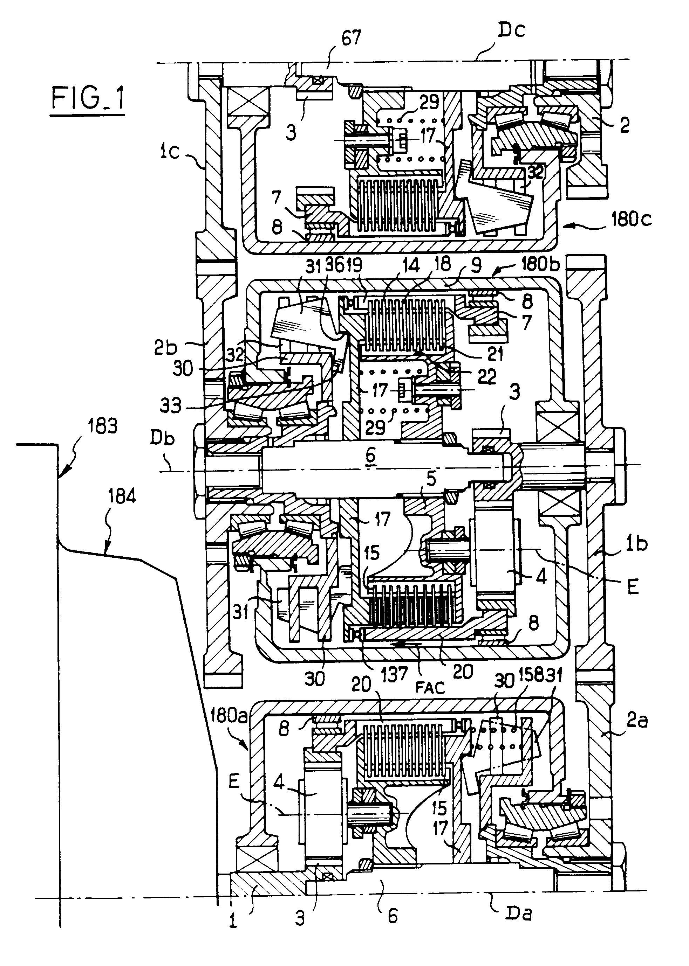

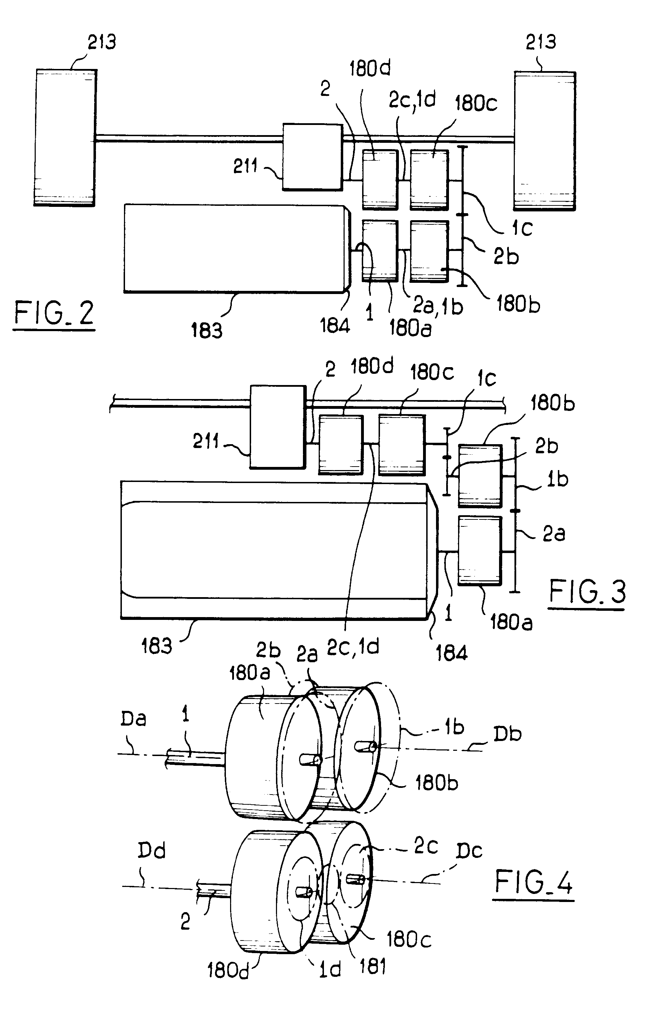

Dans le module A, représenté à la figure 1 de ce document, le crabot est poussé à gauche ou à droite. Le mouvement de rotation peut par exemple être introduit par l'arbre inférieur et prélevé au moyen du module B de la figure 2. Le pignon du module B peut engrener avec l'un ou avec l'autre des deux pignons de l'arbre supérieur du module A, avec au besoin une plaque intercalaire entre les modules A et B pour régler l'entraxe. Les rapports fournis par le module A sont donc fonction non seulement de la position du crabot, mais aussi de la façon dont le module A est raccordé à d'autres éléments dans la transmission. La boîte de vitesses comprenant les modules A et B ainsi qu'éventuellement divers modules accessoires C, D, E, F, G ne fournit, une fois assemblée, que deux rapports déterminés. Un exemple d'un tel assemblage est représenté à la figure 16. Il faut donc au moins deux modules pour réaliser un seul ensemble à deux rapports.

Ce document décrit également la possibilité de réaliser des assemblages plus compliqués, par exemple avec deux modules A et un module B, comme illustré aux figures 13 et 14, la structure du module B étant alors différente de celle de la figure 2. La structure de la figure 14 comprend trois crabots montés sur trois arbres parallèles supportant chacun deux pignons fous, pour coupler l'un ou l'autre de ces deux pignons avec l'arbre correspondant. Le document n'indique nulle part comment sont commandés ces crabots de changement de vitesse.

Par ailleurs, le FR-A-635 886 décrit un dispositif de transmission comprenant deux sous-ensembles successifs à deux rapports qui sont montés en série l'un avec l'autre. Mais ils ne sont pas réalisés sous forme de modules : ils sont dans un carter commun et l'arbre de sortie de l'un constitue, d'une seule pièce, l'arbre d'entrée de l'autre. Chaque sous-ensemble est commandé de manière autonome par de masselottes centrifuges entraînées par la sortie du sous-ensemble.

La présente invention concerne également un groupe motopropulseur pour véhicule ou analogue, équipé d'un tel dispositif de transmission.

Dans les automobiles modernes, le groupe motopropulseur doit être aussi compact que possible et cela pose fréquemment des problèmes, notamment dans le cas des véhicules à traction avant, surtout si le moteur comporte plus de quatre cylindres et si le dispositif de transmission comporte de nombreux rapports et/ou est du type à changement de rapport automatique, car alors ce dispositif de transmission devient nécessairement plus encombrant.

Le but de la présente invention est de remédier à ces inconvénients et en particulier de proposer un dispositif de transmission pouvant comporter de nombreux rapports tout en se logeant dans un espace ayant une forme a priori peu commode.

Suivant l'invention, le dispositif de transmission comprend les caractéristiques de la revendication 1.

L'invention permet ainsi de monter en série des modules de relativement petite taille selon une disposition que l'on choisit à volonté pour exploiter au mieux l'espace disponible dans le compartiment moteur du véhicule.

L'invention permet également de faire en sorte que la sortie du dispositif de transmission se trouve dans une position favorable pour la transmission vers chacune des roues motrices du véhicule.

Ainsi, quelle que soit la disposition des modules, il n'y a pas de nécessité de concevoir un dispositif de commande complexe qui devrait s'adapter sur les modules. Ainsi, on réduit encore le coût de conception spécifique pour chaque type de véhicule que l'on désire équiper avec le dispositif de transmission modulaire selon l'invention.

Cette commande "sensiblement autonome" de certains au moins des modules n'exclut pas que ceux-ci reçoivent de l'extérieur des informations simples telles que celles qui peuvent être transmises par voie électrique ou autre, par exemple une commande dite de "kick-down" pour faire fonctionner le module obligatoirement sur son rapport de plus forte réduction de vitesse lorsque le conducteur du véhicule presse au maximum la pédale d'accélérateur.

Selon un autre aspect de l'invention, celle-ci concerne également un groupe motopropulseur pour véhicule automobile ou analogues, comprenant un moteur et un dispositif de transmission conforme au premier aspect.

D'autres particularités et avantages de l'invention ressortiront encore de la description ci-après relative à des exemples non-limitatifs.

Aux dessins annexés :
- la figure 1 est une vue en coupe axiale d'un dispositif de transmission selon l'invention, les deux modules extrêmes étant représentés en demi-vue seulement ;
- les figures 2 et 3 sont des schémas de deux exemples de groupe motopropulseur selon l'invention pour véhicule à traction avant ; et
- la figure 4 est une vue schématique en perspective d'un autre exemple de dispositif de transmission selon l'invention.

Dans l'exemple représenté à la figure 1, un bloc moteur 183, représenté de manière très partielle et très schématique, entraîne par l'entremise d'un embrayage 184, par exemple de type automatique et dont seul le boîtier extérieur est représenté, un arbre de sortie 1 qui constitue en même temps l'arbre d'entrée dans un premier module à deux rapports 180a dont la sortie 2a, coaxiale et opposée à l'entrée 1, est constituée par une roue dentée qui engrène avec une roue dentée d'entrée 1b dans un deuxième module à deux rapports 180b qui est identique au premier module 180a excepté les différences qui seront décrites plus loin. Une sortie 2b du module 180b engrène avec une entrée 1c d'un troisième module 180c dont la sortie 2 constitue la sortie de la dispositif de transmission constituée par les modules 180a, 180b, 180c.

Conformément à l'invention, ces modules, au lieu d'être coaxiaux, ont des axes respectifs Da, Db et Dc qui sont distincts les uns des autres. Dans l'exemple, ils sont parallèles et écartés les uns des autres, de sorte que la longueur axiale de la dispositif de transmission est quasiment identique à la longueur axiale d'un seul quelconque des trois modules 180a, 180b et 180c.

Chaque module comprend, dans un boîtier respectif 9, une combinaison d'engrenages définissant des rapports de transmission différents entre l'arbre d'entrée 1, 1b ou 1c et la sortie 2a, 2b ou 2.

Dans l'exemple représenté à la figure 1, la combinaison d'engrenages comprend, en référence au module 180b, un train planétaire -encore appelé train épicycloïdal-. Un pignon planétaire 3 est lié rigidement à l'arbre d'entrée 1b de façon à être entraîné en rotation par celui-ci. Le planétaire 3 engrène avec des satellites 4 montés libres en rotation sur un porte-satellites 5. Ce dernier est solidaire d'un arbre central 6 relié à la sortie 2b et ayant même axe de rotation Db que l'arbre d'entrée 1b. On peut par exemple prévoir trois satellites 4 (dont un seul est représenté pour le module 180b à la figure 1) montés pivotants selon trois axes E répartis autour de l'axe Db.

La denture des satellites 4 engrène en outre avec la denture intérieure d'une couronne 7, également centrée et mobile en rotation autour de l'axe Db.

De façon connue, le rapport de transmission entre l'entrée 1b et la sortie 2b dépend des couplages mécaniques qui s'exercent entre les éléments rotatifs (planétaire 3, porte-satellites 5 et couronne 7) du train planétaire. Dans l'exemple représenté, ces couplages mécaniques sont appliqués sélectivement entre le porte-satellites 5 et la couronne 7. Une roue libre 8, montée entre le boîtier fixe 9 de la transmission et le bord extérieur de la couronne 7, empêche la couronne 7 de tourner en sens inverse de l'arbre d'entrée 1.

Un embrayage multidisques est monté entre la couronne 7 et le porte-satellites 5 pour assurer le couplage sélectif entre ces deux éléments rotatifs. Cet embrayage comprend un empilement de disques 14, 15 axialement coulissants.

Des premiers disques 14 de l'empilement sont liés en rotation à la couronne 7. A cet effet, ces disques 14 présentent sur leur bord extérieur des dents extérieures 18 reçues dans des cannelures intérieures 19 de la couronne 7 parallèles à l'axe D définies entre des doigts 20 faisant partie de la couronne 7.

Des seconds disques 15 de l'empilement, qui alternent avec les premiers disques 14, sont liés en rotation au porte-satellites 5. A cet effet, ces seconds disques 15 présentent sur leur bord intérieur des dents intérieures 21 reçues dans des cannelures extérieures 22 du porte-satellites 5, parallèles à l'axe Db. Ces cannelures 22 permettent le coulissement axial des disques 15 relativement au porte-satellites 5.

L'empilement de disques 14, 15 peut être serré sélectivement par un mécanisme monté sur l'arbre central 6. Ce mécanisme comprend un poussoir de serrage 17 en forme de plaque, des ressorts de rappel 29 (dont un seul est représenté), répartis autour de l'arbre 6, des masselottes centrifuges 31 et un support de masselottes 30. Le support 30 est lié rigidement à l'arbre central 6, tandis que le poussoir de serrage 17, interposé axialement entre le support 30 et l'empilement de disques 14, 15, est lié en rotation à cet arbre 6, mais avec liberté de coulissement axial.

La périphérie de la surface du poussoir de serrage 17 est en contact avec le disque 14 ou 15 (15 dans l'exemple) formant une extrémité de l'empilement, tandis que le disque formant l'autre extrémité de l'empilement est en contact avec le porte-satellites 5. Ainsi, lorsque le poussoir de serrage 17 est poussé axialement vers le porte-satellites 5 avec une force suffisante, l'empilement de disques 14, 15 est serré et la couronne 7 et le porte-satellites 5 sont accouplés. Les ressorts de rappel 29 sont montés entre le porte-satellites 5 et le poussoir de serrage 17. La force exercée par ces ressorts 29 tend à pousser axialement le poussoir de serrage 17 en l'éloignant du porte-satellites 5, et donc à desserrer l'empilement de disques 14, 15.

Chaque masselotte 31 a un bec 33 dont une région ayant une composante de déplacement axial est appuyée contre le poussoir 17. Le bec 33 a une fonction de came définissant l'écartement du poussoir 17 par rapport au support 30, qui est fixe axialement par rapport au porte-satellites 5. Par ailleurs, les masselottes 31 sont entraînées en rotation à la vitesse de la sortie 2 et appliquent donc au poussoir 17, à partir du moment où la force des ressorts 29 est vaincue, une poussée qui est une fonction monotone croissante de la vitesse de rotation de la sortie 2.

Pour une vitesse de rotation nulle ou faible du porte-satellites 5 et de son arbre 6, les masselottes 31 occupent, sous l'action des ressorts 29 repoussant le poussoir 17, la position de repos représentée à la partie inférieure du module 180b, au fond de leurs lentes respectives 32. Lorsque cette vitesse de rotation augmente, les masselottes 31 s'écartent de leur position de repos sous l'action de la force centrifuge. Les becs 33 des masselottes étant retenus par un rebord 36 formé à la périphérie du poussoir 17, les masselottes 31 pivotent comme représenté à la partie supérieure du module 180b. Du fait de ce pivotement, les becs 33, dont la région appuyée sur le poussoir 17 a une composante de déplacement axial, écartent axialement le poussoir 17 du support 30. Comme le support 30 est lié rigidement à l'arbre central 6, le poussoir de serrage 17 est poussé vers le porte-satellites 5, à l'encontre des ressorts de rappel 29.

Ainsi, à partir d'une certaine vitesse de rotation du porte-satellites 5, la force centrifuge qui prend naissance dans les masselottes 31 permet à celles-ci de se soulever (comme représenté en haut du module 180b) et de pousser le poussoir 17 contre l'empilement de disques à l'encontre de l'action des ressorts de rappel 29.

Par ailleurs, une butée axiale 137 est montée entre la couronne 7 et le poussoir 17.

Les dentures du pignon planétaire 3, des satellites 4 et de la couronne 7 sont de type hélicoïdal. Cela est classique pour supprimer le bruit de fonctionnement des engrenages. Mais on sait que les dentures hélicoïdales produisent, lorsqu'elles travaillent, une poussée axiale sur les pièces portant ces dentures. Par conséquent, la couronne 7, lors du fonctionnement en réducteur, produit une poussée axiale F_{AC} qui est transmise au poussoir 17 par la butée 137 et qui est proportionnelle au couple sur l'arbre d'entrée 1.

Le sens d'inclinaison des dentures hélicoïdales est choisi pour que la poussée F_{AC} s'ajoute à celle des ressorts 29.

La différence entre la force axiale produite par les masselottes 31 sur le poussoir 17 et la force contraire produite sur le même poussoir 17 par les ressorts 29 ensemble avec la poussée axiale F_{AC} constitue, si cette différence est positive, une force de serrage de l'empilement de disques 14, 15.

En fonction du couple auquel est soumis l'arbre d'entrée 1b, cette force de serrage va être suffisante ou au contraire insuffisante pour solidariser le porte-satellites 5 avec la couronne 7 du train épicycloïdal. Si le couple sur l'arbre d'entrée 1b est relativement faible par rapport à la vitesse de rotation de la sortie 2b, la force de serrage sera suffisante, et le porte-satellites 5 sera solidarisé avec la couronne 7. Dans cette situation, les satellites 4 ne peuvent plus rouler sur la couronne 7, et par conséquent ne peuvent plus tourner sur eux-mêmes autour de leur axe E. Par conséquent, les satellites 4 ne roulent pas non plus sur le planétaire 3. Il y a donc solidarisation en rotation entre l'arbre 1b et le porte-satellites 5, et par conséquent prise directe entre l'arbre d'entrée 1b et la sortie 2b du module 180b.

Si au contraire le couple présent sur l'arbre d'entrée 1b est relativement élevé par rapport à la vitesse de rotation du porte-satellites 5, la force de serrage appliquée à l'empilement de disques 14, 15 est insuffisante pour solidariser la couronne 7 et le porte-satellites 5. Dans ce cas, comme le porte-satellites 5 tend à rester immobile sous l'action de la charge à entraîner par la sortie 2b, les satellites 4 tendent à se comporter en inverseurs de mouvement, c'est-à-dire à faire tourner la couronne 7 en sens inverse de la rotation de l'arbre 1b. Mais ceci est empêché par la roue libre 8, de sorte que la couronne 7 est alors immobile par rapport au boîtier 9, et le porte-satellites 5 prend une vitesse de rotation qui est intermédiaire entre la vitesse de l'arbre d'entrée 1b et la vitesse nulle de la couronne 7. Dans ce cas, le module fonctionne en réducteur de vitesse.

Entre ces deux situations, il y a une situation intermédiaire, dans laquelle le couple sur l'arbre d'entrée 1b a une valeur que l'on peut qualifier de moyenne par rapport à la vitesse de rotation du porte-satellites 5. Ceci correspond à une certaine plage de valeurs de couple sur l'arbre 1b pour une vitesse de rotation donnée du porte-satellites 5, et à une plage de vitesses de rotation du porte-satellites 5 pour chaque valeur de couple sur l'arbre 1b. Dans cette situation, l'embrayage 14, 15 tend à conserver l'état dans lequel il se trouve, c'est-à-dire à rester à l'état d'adhérence lorsqu'il est à l'état d'adhérence, et à rester à l'état de patinage lorsqu'il est à l'état de patinage.

En particulier, lorsque l'embrayage est serré, aucun effort n'est transmis entre la denture des satellites 4 et celle de la couronne 7, et par conséquent la réaction axiale F_{AC} disparaît. C'est-à-dire qu'une fois le rapport supérieur enclenché, il faudra une nette diminution de la vitesse de rotation ou une nette augmentation du couple sur l'arbre 1b pour que le module repasse à son rapport inférieur. Dès que le module est repassé à son rapport inférieur, la force axiale F_{AC} réapparait et par conséquent stabilise le fonctionnement sur le rapport inférieur.

En d'autres termes, à chaque changement d'état de l'embrayage, la force axiale F_{AC} varie dans le sens stabilisant le rapport de transmission venant d'être mis en service.

Les deux modules 180b et 180c peuvent être rigoureusement identiques, y compris quant à leur réglage. Mais, toujours dans l'exemple représenté, le module 180a diffère des deux modules 180b et 180c en ce que les masselottes 31 y sont beaucoup moins nombreuses, par exemple seulement trois ou quatre masselottes au lieu de trente ou quarante. Entre les masselottes du module 180a sont disposés des ressorts de compression 158 qui poussent axialement le poussoir 17 dans le sens du serrage de l'embrayage, c'est-à-dire dans le même sens que les masselottes 31 lorsqu'elles sont soumises à la force centrifuge.

Par contre, les ressorts 29 tendant à desserrer l'embrayage sont supprimés.

Le fonctionnement est le suivant : au début, l'embrayage 14, 15 du module 180a est serré par les ressorts 158 et les embrayages 14, 15 des modules 180b et 180c sont desserrés par les ressorts 29, de sorte que le module 180a fonctionne en prise directe et les modules 180b et 180c fonctionnent en réducteur. Ainsi, parmi les deux modules 180b et 180c, c'est le module 180b qui est celui où la vitesse de rotation est la plus élevée et le couple transmis le plus faible. C'est donc lui qui atteint en premier les conditions dans lesquelles ses masselottes 31 parviennent à serrer l'embrayage 14, 15 de sorte que ce module 180b passe en prise. Ceci réduit le couple transmis au module 180c suivant, mais non pas sa vitesse de rotation qui est déterminée par la vitesse de la sortie 2. Il faut donc que cette vitesse augmente pour que, le couple étant supposé constant, les masselottes du module 180c parviennent à faire passer celui-ci en prise pour que le dispositif fonctionne selon un troisième rapport, qui est un rapport de prise directe.

Lorsque, en fonction du couple présent sur l'arbre 1, le module d'entrée 180a fonctionne en réducteur, les modules 180b et 180c fonctionnent encore comme il a été décrit plus haut, à trois réserves près :
- comme le couple présent sur l'arbre 1b est augmenté, le passage de première en deuxième nécessite une force plus importante de la part des masselottes 31 du module 180b et se fera donc à un régime moteur plus élevé ;
- pour la même raison, le passage de deuxième en troisième nécessitera une force plus importante de la part des masselottes 31 du module 180c et par conséquent se fera pour une vitesse plus élevée de l'arbre de sortie 2 ;
- une fois ce passage de deuxième en troisième effectué, la vitesse de rotation du moteur va augmenter jusqu'à ce que le couple moteur diminue suffisamment (au-delà de la vitesse de rotation du moteur pour laquelle le couple moteur est maximal, le couple moteur disponible décroît en fonction de la vitesse de rotation du moteur) pour que les ressorts 158 provoquent le passage du module d'entrée 180a en prise directe, qui constitue alors un quatrième rapport de transmission.

On a ainsi réalisé une transmission automatique pour véhicule qui fonctionne soit, en conduite paisible, avec trois rapports, et des régimes moteur relativement bas, soit, en conduite sportive, avec quatre rapports dont les trois premiers sont différents des deux premiers de la conduite paisible en faisant fonctionner le moteur à des régimes proches de la puissance maximale, qui optimisent les performances.

Le rôle des masselottes 31 du module 180a est de faire augmenter en fonction croissante de la vitesse de rotation du moteur le seuil de couple à partir duquel le module 180a passe du fonctionnement en prise directe au fonctionnement en réducteur. Ceci évite que le module 180a passe au fonctionnement en réducteur alors que la vitesse de rotation du moteur est déjà relativement élevée.

Grâce aux modules et à leur disposition, le dispositif de transmission est performant, simple et particulièrement court en direction axiale. La disposition représentée pourrait par exemple être favorable pour un groupe moto-propulseur destiné à une automobile à traction avant dont le moteur est disposé longitudinalement, en avant ou en arrière de l'essieu moteur.

On pourrait encore utiliser ce type de transmission avec un moteur dont les cylindres seraient disposés horizontalement sensiblement dans le même plan que les axes Da, Db et Dc des modules.

Comme les modules comportent en eux-mêmes des moyens de commande (masselottes 31, ressorts 158, ressorts 29, butées 137), il n'y a aucune nécessité de réaliser un dispositif de commande qui s'adapte sur l'ensemble des modules. Il suffit donc, pour l'essentiel, de réaliser plusieurs modules identiques ou similaires et de les fixer les uns aux autres, par exemple en fixant les carters 9 les uns aux autres.

On a représenté à la figure 2 un autre exemple de groupe moto-propulseur selon l'invention.

Le moteur 183 est disposé transversalement, c'est-à-dire parallèlement aux axes des roues motrices 213, reliées chacune à l'une des sorties d'un différentiel 211. Celui-ci peut être classique dans son principe. L'entrée du différentiel 211 est constituée par la sortie 2 du dispositif de transmission.

Celui-ci comprend non plus trois modules seulement, mais quatre modules 180a, 180b, 180c et 180d. Les modules 180a, 180b et 180c sont identiques à ceux de la figure 1, et le module 180d est identique aux modules 180b et 180c.

Les deux modules 180a et 180b sont coaxiaux, et coaxiaux avec le moteur 183. C'est-à-dire que la sortie 2a du module 180a est confondue avec l'entrée 1b du module 180b.

De même, les modules 180c et 180d sont coaxiaux, de sorte que la sortie 2c du module 180c est confondue avec l'entrée 1d du module 180d. L'axe commun des modules 180a et 180b est parallèle et espacé par rapport à celui des modules 180c et 180d. La sortie 2b du module 180b est constituée par une roue dentée engrenant avec une autre roue dentée constituant l'entrée 1c du module 180c.

Grâce à cette disposition, on loge sans difficulté entre les roues motrices 213 le moteur 183, l'embrayage 184 et le dispositif de transmission, tout en ayant l'avantage que le différentiel 211 peut être situé à égale distance entre les deux roues.

L'exemple de la figure 3 pourra être préféré dans le cas d'un moteur ayant une plus grande longueur axiale, par exemple un moteur à six cylindres en ligne.

On retrouve le dispositif de transmission à quatre modules 180a, 180b, 180c et 180d dont la sortie 2 constitue l'entrée du différentiel 211.

La disposition des modules 180a et 180b l'un par rapport à l'autre est identique à celle de la figure 1.

La sortie 2b du module 180b est constituée par une roue dentée qui engrène avec une roue dentée constituant l'entrée 1c du module 180c. Le module 180c et le module 180b sont disposés de part et d'autre du plan des roues dentées 1c et 2b. La disposition globale des modules 180c, 180d et du différentiel 211 est identique à celle de la figure 2.

Dans l'exemple de la figure 4, les quatre modules 180a à 180d sont disposés d'une manière similaire à celle représentée à la figure 1 pour les modules 180a à 180c, mais les axes Da, Db, Dc et Dd, au lieu d'être coplanaires, sont disposés en cercle, en d'autres termes ils constituent quatre génératrices d'un même cylindre virtuel. Les modules 180a et 180b sont reliés l'un à l'autre comme ceux des figures 1 et 3. Les modules 180b et 180c sont reliés l'un à l'autre comme ceux de la figure 1, mais ceci est peu visible à la figure 4 car caché compte tenu de l'angle sous lequel est faite la vue en perspective. Les modules 180c et 180d sont reliés l'un à l'autre par une pignonnerie comprenant un pignon intermédiaire 181, ce qui permet aux roues dentées 1d et 2c constituant l'entrée du module 180d et respectivement la sortie du module 180c, d'avoir un diamètre plus faible et par conséquent de ne pas interférer avec les roues dentées constituant la sortie 2a du module 180a et l'entrée 1b du module 180b.

Bien entendu, l'invention n'est pas limitée aux exemples décrits et représentés.

Les modules pourraient être tous identiques, y compris le module d'entrée 180a, de manière à réaliser une transmission automatique fonctionnant en permanence avec par exemple quatre rapports (trois modules) ou cinq rapports (quatre modules).

Bien qu'il soit préférable que les modules fonctionnent de manière aussi autonome que possible, on peut cependant prévoir des moyens pour leur adresser des informations ou commandes spécifiques dans des conditions déterminées, par exemple en cas de brusque accélération ou de freinage.

On n'a pas représenté les fixations des modules entre eux, non plus que les fixation du dispositif de transmission à un chassis de véhicule, ni les éventuels capotages que l'on peut prévoir pour protéger les engrenages de liaison. Ces moyens complémentaires sont faciles à concevoir par un homme de métier de compétence ordinaire.

Il est possible de disposer les modules de manière que leurs axes forment des angles entre eux.

## Revendications

1. Dispositif de transmission comprenant au moins deux modules de transmission disposés en série selon des axe différents (Da, Db, Dc) des moyens de commande (29, 31, 137, 158) pour faire fonctionner chacun de ces deux modules sélectivement selon l'un et l'autre d'au moins deux rapports de transmission, caractérisé en ce qu'un moyen de liaison mécanique (2a, 1b ; 2b, 1c ; 2c, 181, 1d) relie une entrée de l'un (180b, 180c) des modules avec une sortie de l'autre module (180a, 180b) de manière que les modules soient fonctionnellement en série, et en ce que les moyens de commande sont répartis dans les modules et permettent à certains au moins des modules de passer de manière sensiblement autonome d'un rapport de transmission à l'autre.

2. Dispositif de transmission conforme à la revendication 1, caractérisé en ce que les deux modules ont des axes parallèles (Da, Db, Dc, Dd).

3. Dispositif de transmission conforme à la revendication 1 ou 2, caractérisé en ce qu'il comprend au moins trois modules (180a-d) montés côte à côte selon des axes parallèles (Da-d) et reliés mécaniquement en série par des moyens de liaison mécanique (2a, 1b ; 2b, 1c ; 2c, 181, 1d) intercalés entre les modules successifs.

4. Dispositif de transmission conforme à la revendication 3, caractérisé en ce que les modules (180a-c) montés côte à côte forment une cascade rectiligne.

5. Dispositif de transmission conforme à la revendication 3, caractérisé en ce que les modules (180a-d) montés côte à côte forment une cascade courbe.

6. Dispositif de transmission conforme à la revendication 1 ou 2, caractérisé en ce que l'un au moins des deux modules est relié coaxialement avec au moins un troisième module.

7. Dispositif de transmission selon l'une des revendications 1 à 6, caractérisé en ce que l'un au moins des modules comprend un engrenage différentiel à trois éléments rotatifs (3, 5, 7) portant des dentures hélicoïdales interengrenées, une roue libre (8) empêchant l'un (7) des éléments rotatifs de tourner en sens inverse, un embrayage à friction (14, 15) pour sélectivement accoupler l'un à l'autre deux éléments rotatifs (5, 7), et un moyen de commande (31, 158) pour solliciter l'embrayage dans le sens du serrage, l'un (7) des trois éléments rotatifs étant mobile axialement pour transmettre à l'embrayage, dans le sens du desserrage, une force axiale née de l'engrènement sous charge des dentures hélicoïdales, le montage étant tel que la force axiale est au moins en partie supprimée lorsque l'embrayage est à l'état accouplé.

8. Dispositif de transmission selon la revendication 7, caractérisé en ce que le moyen de commande pour solliciter l'embrayage comprend des masselottes centrifuges (31).

9. Dispositif de transmission selon la revendication 7 ou 8, caractérisé en ce que le moyen pour solliciter l'embrayage comprend des ressorts de compression (158).

10. Groupe motopropulseur pour véhicule automobile ou analogues, comprenant un moteur (183) et un dispositif de transmission (180a-d) conforme à l'une des revendications 1 à 9.

## Claims

1. A transmission device comprising at least two transmission modules arranged in series along different axes (Da, Db, Dc), control means (29, 31, 137, 158) for controlling operation of each of both said modules selectively in one and the other of at least two transmission ratios, characterized in that a mechanical connecting means (2a, 1b ; 2b, 1c ; 2c, 181, 1d) connects an input of one (180b, 180c) of the modules to an output of the other module (180a, 180b) whereby the modules are operatively in series, and in that the control means are distributed in the modules and allow substantially autonomous shifting of at least some of the modules between one and the other transmission ratio.

2. A transmission device according to claim 1, characterized in that both modules have parallel axes (Da, Db, Dc, Dd).

3. A transmission device according to claim 1 or 2, characterized in that it comprises at least three modules (180a-d) mounted side by side with parallel axes (Da-d) and mechanically connected in series by mechanical connecting means (2a, 1b ; 2b, 1c ; 2c, 181, 1d) which are inserted between the successive modules.

4. A transmission device according to claim 3, characterized in that the modules (180a-c) mounted side by side form a rectilinear array.

5. A transmission device according to claim 3, characterized in that the modules (180a-d) mounted side by side form an arcuate array.

6. A transmission device according to claim 1 or 2, characterized in that one at least of both modules is coaxially connected with at least one third module.

7. A transmission device according to one of claims 1-6, characterized in that at least one of the modules comprises a differential gear having three rotating elements (3, 5, 7) carrying intermeshed helical teeth, a free wheel (8) preventing one of the rotating elements from reverse rotation, a friction clutch (14, 15) for selectively coupling two rotating elements (5, 7) to each other, and a control means (31, 158) for biasing the clutch towards tightening thereof, one (7) of the three rotating elements being axially movable for transmitting to the clutch, in the direction of release thereof, an axial thrust generated by meshing of the helical teeth under load, the arrangement being such that the axial thrust is at least in part cancelled when the clutch is in the coupled condition.

8. A transmission device according to claim 7, characterized in that the control means for biasing the clutch comprises centrifugal weights (31).

9. A transmission device according to claim 7 or 8, characterized in that the means for biasing the clutch comprises compression springs (158).

10. A power and transmission unit for a motor vehicule or the like, comprising an engine (183) and a transmission device (180a-180d) in accordance with anyone of claims 1-9.

## Patentansprüche

1. Getriebe, umfassend mindestens zwei Getriebemodule, die in Serie entlang verschiedenen Achsen (Da, Db, Dc) angeordnet sind, Steuermittel (29, 31, 137, 158), um jeden dieser zwei Module selektiv gemäß dem einen und dem anderen mindestens zweier. Übersetzungsverhältnisse arbeiten zu lassen, dadurch gekennzeichnet, daß ein Mittel zur mechanischen Verbindung (2a, 1b; 2b, 1c; 2c, 181, 1d) einen Antrieb des einen (180b, 180c) der Module mit einem Abtrieb des anderen Moduls (180a, 180b) verbindet, und zwar derart, daß die Module funktionell in Serie sind, und daß die Steuermittel in den Modulen verteilt sind und zumindest einigen der Module gestatten, im wesentlichen autonom von einem Übersetzungsverhältnis zum anderen überzuwechseln.

2. Getriebe nach Anspruch 1, dadurch gekennzeichnet, daß die zwei Module parallele Achsen (Da, Db, Dc, Dd) haben.

3. Getriebe nach Anspruch 1 oder 2, dadurch gekennzeichnet, daß es mindestens drei Module (180a-d) umfaßt, die nebeneinander entlang paralleler Achsen (Da-d) befestigt sind und durch mechanische Verbindungsmittel (2a, 1b; 2b, 1c; 2c, 181, 1d), welche zwischen den aufeinanderfolgenden Modulen angeordnet sind, mechanisch in Serie verbunden sind.

4. Getriebe nach Anspruch 3, dadurch gekennzeichnet, daß die nebeneinander befestigten Module (180a-c) eine geradlinige Kaskade bilden.

5. Getriebe nach Anspruch 3, dadurch gekennzeichnet, daß die nebeneinander befestigten Module (180a-d) eine bogenförmige Kaskade bilden.

6. Getriebe nach Anspruch 1 oder 2, dadurch gekennzeichnet, daß mindestens einer der zwei Module mit mindestens einem dritten Modul koaxial verbunden ist.

7. Getriebe nach einem der Ansprüche 1 bis 6, dadurch gekennzeichnet, daß mindestens einer der Module ein Differential mit drei drehbaren Elementen (3, 5, 7), die ineinandergreifende Schrägverzahnungen tragen, einen Freilauf (8), welcher eines (7) der drehbaren Elemente daran hindert, sich in die entgegengesetzte Richtung zu drehen, eine Reibungskupplung (14, 15), um zwei drehbare Elemente (5, 7) selektiv miteinander zu kuppeln, sowie ein Steuermittel (31, 158) zur Belastung der Kupplung in der Preßrichtung umfaßt, wobei eines (7) der drei drehbaren Elemente axial verschiebbar ist, um auf die Kupplung in der Lockerungsrichtung eine axiale Kraft zu übertragen, die aus dem Eingriff unter Last der Schrägverzahnung herrührt, wobei die Anordnung derart ist, daß die axiale Kraft wenigstens teilweise wegfällt, wenn sich die Kupplung im gekuppelten Zustand befindet.

8. Getriebe nach Anspruch 7, dadurch gekennzeichnet, daß das Steuermittel zur Belastung der Kupplung Fliehgewichte (31) umfaßt.

9. Getriebe nach Anspruch 7 oder 8, dadurch gekennzeichnet, daß das Mittel zur Belastung der Kupplung Druckfedern (158) umfaßt.

10. Antriebseinheit für ein Kraftfahrzeug oder dergleichen, welche einen Motor (183) und ein Getriebe (180a-d) entsprechend einem der Ansprüche 1 bis 9 umfaßt.
